# EUROPEAN PATENT APPLICATION

(11) **EP 1 043 846 A2**
(43) Date of publication of application: **11.10.2000**
(21) Application number: 00107275.0
(22) Date of filing: 04.04.2000
(51) Int. Cl.: H04B 10/10

(54) **Wireless transmission communication system**

(30) Priority: 05.04.1999 US 286081
(71) Applicant: PHONIC EAR, INC., Petaluma, CA 94954-7600 (US)
(72) Inventor: Lam, Keith, c/o Phonic Ear Inc., Petaluma, CA 94954-7600 (US); Ho, Yvonne, c/o Phonic Ear Inc., Petaluma, CA 94954-7600 (US); Danehy, Lynn, c/o Phonic Ear Inc., Petaluma, CA 94954-7600 (US)
(74) Representative: Christensen, Mikael T.

(57) **Abstract**

The invention relates to communication system for infrared transmission of a signal from a non-stationary speaker to a sound reproducing system, the communication system comprising two microphones; at least one signal emitter; a receiver and end transmission equipment, where the microphones form part of a single portable unit suitable for placement around a wearers neck and where the microphones are placed with mutual distance in a fixed position in relation to the unit and at least one signal emitter is placed in a position primarily in front of the wearers head. The invention further relates to a microphone unit for use in such wireless communication systems.

## Description

### FIELD OF THE INVENTION

The invention relates to wireless communication systems. Such systems are well known within the art of transmitting a signal from an emitter to a receiver. The systems comprise both infrared communication systems and radio frequency communication systems.

### BACKGROUND OF THE INVENTION

A previously known system comprises a stationary microphone for transforming an acoustical signal to an electrical signal, which is modulated for infrared transmission in modulating electronics. These electronics are connected to a stationary IR emitter, which transmits the modulated signal. An IR receiver, e.g. mounted in a headset or body-pack, is provided at each of the persons in the environment desiring to receive the emitted signal. The received signal is demodulated in demodulating electronics and transferred to the earphones worn by the listener. The receivers and connected demodulating electronics may be connected to various other types of transmission equipment, such as loudspeakers.

It is obvious that such system will only provide a satisfying functionality in the situation where the speaker is in a stationary position, meaning that such systems may be sufficient for conference purposes. However a number of situations may be set forth where the stationary system is insufficient, due to the speakers need of moving into different positions. One very important situation is the education situation in schools, universities and similar.

Due to the above-mentioned disadvantages the education environment has until recently only been able to use radio frequency transmission systems. Such systems has a significant functionality, however since the signal may travel beyond the limitations of the classroom in the school there is a need of using a different transmission frequency for each classroom. This means that such systems may have limitations of use where the required number of frequencies cannot be provided and furthermore that the transmitter and receivers have to be tuned to the same frequency, which may cause some trouble in case a significant number of different frequencies are used. Furthermore the systems usually comprise a clip on type microphone. In an education environment the speaker has to move his/her head from side to side, which means that the sound pressure to the microphone often will be weak, resulting in a weak signal and hence in a poor intelligibility for the students. Furthermore headsets are known, which are mounted on the head of the speaker and where the microphone is mounted on a boom. These headsets are undesirable due to the head mounting, as many find that they interfere with the hair of the wearer.

Compared to the radio frequency transmission systems the IR transmission systems have the advantage of not being able to transmit a signal beyond the physical limitations of the environment, i.e. the walls, the floor and the ceiling, meaning that the same transmission frequency may be used in adjacent class rooms in a school.

In order to remedy the disadvantages of the previously known stationary IR transmission systems as mentioned above, systems have been introduced, which comprises a portable microphone and a portable infrared emitter. The emitter transmits a signal, which is received by a stationary receiver. The signal is afterwards processed and transmitted to stationary loudspeakers. The portable microphone and emitter normally are arranged as neckbands or clip on units meaning that the microphone and the emitter are adapted to be placed in front of the body of the user. In connection with the microphone this means, like in connection with the above mentioned microphones of the RF transmission systems, that the often occurring movements of the speakers head in many positions will provide an insufficient input due to variations in sound pressure level and therefor a similar insufficient output. In connection with the IR emitter this type of mounting means that that the body of the speaker may block the emitter in relation to the receiver when the speakers body is in between the emitter and the receiver hereby possibly blocking the signal. These two disadvantages mean that the IR communication systems in many situations have had an insufficient functionality in connection with non-stationary speakers.

Furthermore a system is known, which comprises a handheld microphone/emitter unit. This means that the speaker is unable to use both hands and at the same time hold the microphone in a correct position. This is inconvenient in many situations, i.e. in an education environment.

As described above in connection with the previously known wireless communication systems there exist several drawbacks, especially under conditions where the speaker has to move around, i.e. in an education environment. Therefore there is a need of improving such wireless transmission systems for use by non-stationary speakers.

In one aspect it is an object of the present invention to provide a wireless communication system, which allows the speaker to move his/her head from side to side without influencing the microphone input signal significantly. It is a further object to provide a wireless communication system having a microphone unit, which does not interfere with the hair of the speaker and which allows the speaker to use both hands and speak simultaneously. In another aspect it is an objective of the present invention is to provide a microphone unit for use in connection with a wireless communication system, which provides the advantages of allowing the speaker to move his/her head from side to side without influencing the microphone input signal significantly. It is another object of the invention to provide a microphone unit, which does not interfere with the hair of the speaker and which allows the speaker to use both hands and speak simultaneously.

### SUMMARY OF THE INVENTION

According to the invention this is achieved by means of a system comprising: At least two microphones for receiving the wearers voice; at least one signal emitter; a receiver and end transmission equipment; where the microphones form part of a single portable unit suitable for placement around the wearers neck and where the microphones are placed in a fixed position in relation to the unit and with a mutual distance allowing the wearer to turn his head from side to side substantially and still maintain a significant sound pressure level towards at least one microphone.

Since the microphones are placed in a fixed position with mutual distance it is possible to provide an optimal positioning in front of the wearers mouth independent of the wearers position of the head, hereby being able to provide a proper microphone input signal independent of the position of the wearers head. As the microphones form part of a single unit they are put on in a single operation which facilitates the use of the system. The receiver(s) may be stationary or portable. The end receiver equipment may comprise one or more loudspeakers or as an alternative portable loudspeaker headsets.

In one embodiment an IR emitter is provided as a signal emitter. In a preferred embodiment at least two IR emitting means are provided, where these two means are positioned on the unit to cover different transmission areas. Hereby the blocking of the IR signals is reduced significantly.

Preferably the two IR emitting means are electrically connected in parallel. Hereby power consumption is reduced.

In a still further preferred embodiment four IR emitting means are provided. Preferably all the IR emitting means are electrically connected in parallel. The four IR means provides for an even more improved area coverage. Moreover the presence of four means provides for backup in case of failure of one of the IR means.

When positioning of the IR emitter(s) in front of the wearer's head and at a distance from the head and the chest the blocking of the emitter in relation to the receiver by the body of the wearer will be prevented to the widest possible extent.

The invention further relates to a microphone unit for use in a wireless transmission communication system, the microphone unit comprising at least two microphones; at least one signal emitting means; the two microphones being mounted in a position with mutual distance in front of the wearers mouth, allowing the wearer to turn his head from side to side substantially and still maintain a significant sound pressure level towards at least one microphone.

In one embodiment a IR emitter is provided as a signal emitter. In a preferred embodiment at least two IR emitting means are provided, where these two means are positioned to cover different transmission areas. The two IR emitting means are advantageously electrically connected in parallel.

Even more advantageous is it when four IR emitting means are provided and where all the IR emitting means are electrically connected in parallel.

The microphones are in the preferred embodiment placed on the unit in such a manner that they are distanced from the chest of the wearer, preferably at positions close to the wearer's mouth. Hereby the microphones are optimally positioned for reception of the wearer's voice. The IR emitting means is/are preferably positioned adjacent the microphones. This reduces the blocking to a minimum since the IR emitting means hereby are somewhat distanced from the users body.

In another preferred embodiment an antenna is provided as a signal emitter for transmission of RF signals, preferably FM signals. As the effect of the two microphone unit is not dependent of the sort of transmission equipment this alternative embodiment will provide the same benefits for an RF transmission system as for an IR transmission system.

In a preferred embodiment the microphone unit comprises a curved element having two opposite ends, where the microphones are positioned substantially at the respective ends of the curved element. This embodiment of the unit rests against the back of the wearer's neck and the shoulders of the wearer with the respective ends in front of the wearer's face.

In a still further preferred embodiment the microphone unit comprises a curved element having two opposite ends, where the ends of this curved element are adapted to rest behind the wearers neck and where the microphones are positioned at a distance from these opposite ends, preferbly on arms protruding from the curved element. This embodiment also rests against the back of the wearer's neck. This embodiment has the advantage of being mountable from the front of the wearer, hereby avoiding any interference with the wearer's hair and furthermore requiring a less extensive arm movement during the mounting. The placement of the microphones on arms protruding from the curved element brings the microphones closer to the wearer's mouth, hereby improving the voice reception.

The curved element is preferably manufactured from a flexible material allowing the ends of it to be flexed in a manner, which allows these to pass the neck of the wearer and flex back to a position where the ends may rest behind the neck of the wearer. In this resting position the microphones are in a suitable position for receiving the wearer voice signals. Instead of a curved element an angular element may be provided.

### BRIEF DESCRIPTION OF THE DRAWINGS

FIG. 1 is a schematic diagram showing a communication system according to the invention;
FIG. 2 is a front view of a first microphone/emitter unit according to the invention;
FIG. 3 is a perspective view of the first microphone/emitter unit according to the invention.
FIG. 4 is a front view of a second embodiment microphone/emitter unit according to the invention;
FIG. 5 is a perspective view of the second microphone/emitter unit according to the invention.

### DESCRIPTION OF THE PREFERRED EMBODIMENT

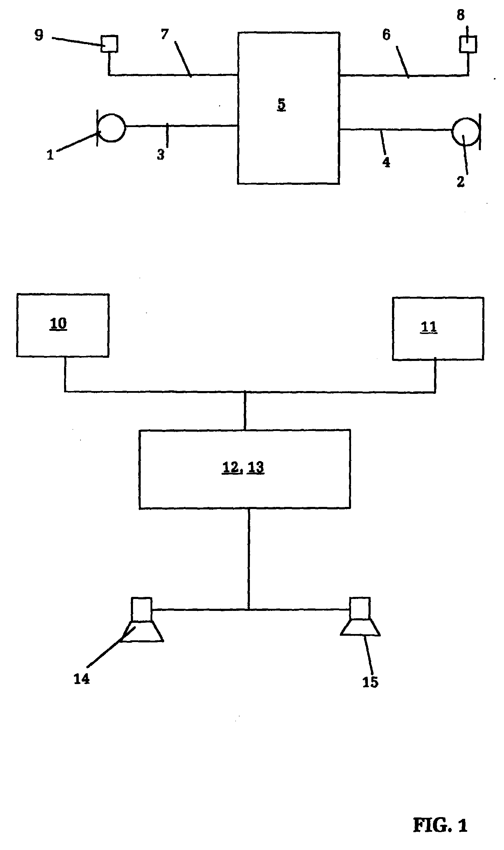

From FIG. 1 a communication system appears, which comprises a speaker side system and a listener side system.

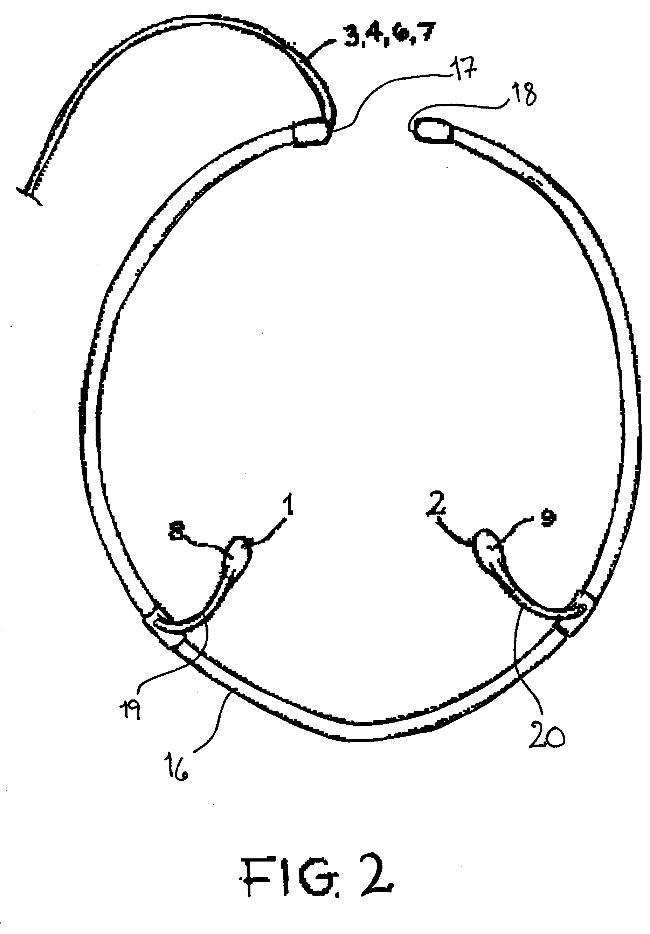

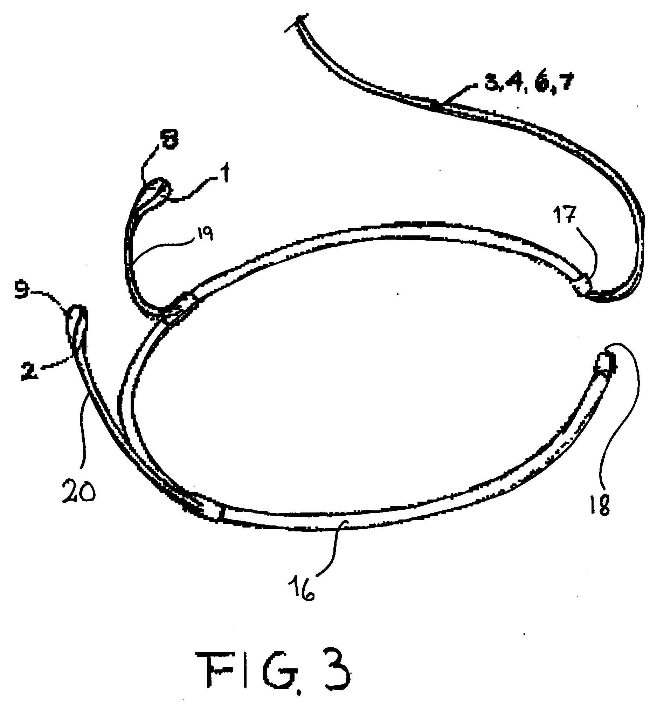

The speaker side system comprises a microphone unit comprising two microphones 1,2 and two infrared (IR) LED's 8,9 mounted on a collar. The unit is described more detailed in connection with Fig.2 and Fig. 3. The microphone input signals are transferred to a modulating system 5 through wires 3,4 and after modulation from the modulating system 5 through wires 6,7 to the LED's 8,9 which emit the signal towards the listener side system. The speaker side system is powered by a battery.

The listener side system comprises two receivers 10,11 (further receivers may be provided), a demodulating system 12, an amplifier 13 and two speakers 14,15 for outputting the received, demodulated and possibly amplified signal.

The listener side system may be powered either by a battery or by any other available electrical power source. The listener side system may be stationary, portable or a combination of these.

The modulating and demodulating electronics are well known within the art of wireless transmission in the IR and in the RF area.

From FIG. 2 a microphone unit according to the invention appears in a front view. It appears that the microphone unit comprises a collar-like curved element 16 having two free ends 17,18, which are intended to be located at the rear side of the wearers neck when the microphone unit is mounted. The two microphones 1,2 are mounted on two arms 19,20 protruding from the collar 16 in such manner that the microphones preferably have a mutual distance of between 2 and 6 inches. This may however be different dependent of the characteristics of the microphones. The LED's 8,9 are mounted on the same protruding arms 19,20.

From FIG. 3 the microphone unit appears seen from the side. It appears that the arms 19,20 protrude somewhat from the curved element 16 adapted for mounting round the wearer's neck. Hereby the microphones 1,2 are brought closer to the wearer's mouth and an improved input is achieved.

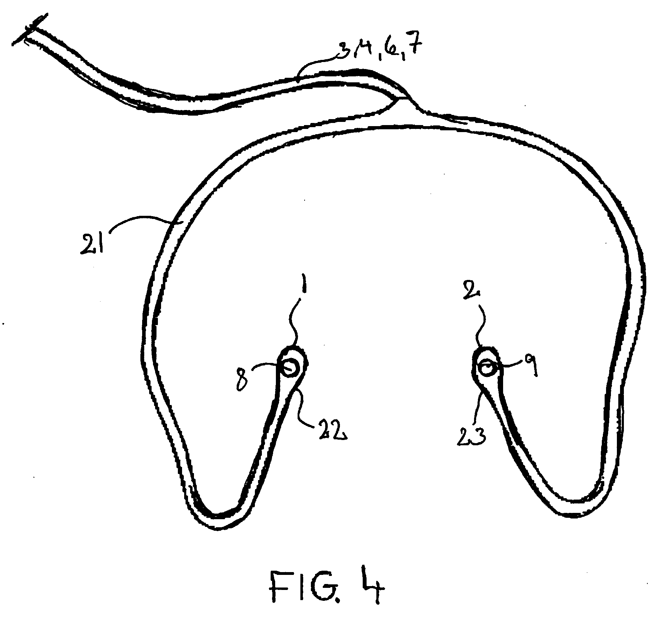

From FIG. 4 a second microphone unit according to the invention appears in a front view. It appears that the microphone unit comprises a collar-like curved element 21 having two free ends 22,23 intended to be located at the front of the wearers neck when the microphone unit is mounted. The two microphones 1,2 are mounted at the ends 22,23 of the curved element 21 in such manner that the microphones preferably have a mutual distance of between 2 and 6 inches. The LED's 8,9 are mounted adjacent the microphones at the ends 22,23 of the curved element 21.

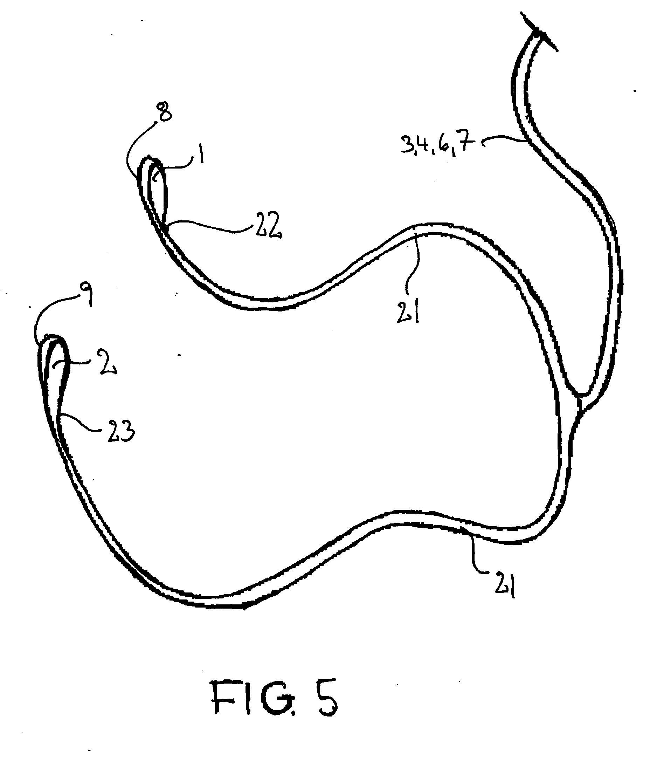

From FIG. 5 the microphone unit appears seen from the side. It appears that the curved element is somewhat bend at a short distance from the ends in order hereby to bring the microphones closer to the wearer's mouth and hereby achieve an improved input.

## Claims

1. A communication system comprising:
- at least two microphones for receiving the wearers voice;
- modulation electronics in connection with the microphones;
- at least one signal emitter in connection with the modulating electronics adapted for transmitting the signal;
- at least one receiver;
- demodulating electronics in connection with the at least one receiver;
- end transmission equipment;
- where the two microphones form part of a single portable unit suitable for placement around a wearers neck;
- where at least two microphones are placed in a fixed position in relation to the unit and with a mutual distance allowing the wearer to turn his head from side to side substantially and still maintain a significant sound pressure level towards at least one microphone.

2. A system according to claim 1, where at least two IR emitting means are provided as signal emitters and where these two means are positioned to cover different transmission areas.

3. A system according to claim 2, where the two IR emitting means are electrically connected in parallel.

4. A system according to claim 1, where four IR emitting means are provided and where all the IR emitting means are electrically connected in parallel.

5. A system according to claim 1, where an antenna is provided as a signal emitter for transmission of RF signals, preferably FM signals.

6. A microphone unit for use in wireless transmission communication system, the microphone unit comprising at least two microphones for receiving the wearers voice; at least one signal emitting means; the two microphones being mounted on the unit in positions with a mutual distance allowing the wearer to turn his head from side to side substantially and still maintain a significant sound pressure level towards at least one microphone.

7. A microphone unit according to claim 6, where at least two IR emitting means are provided as signal emitters and where these two means are positioned to cover different transmission areas.

8. A microphone unit according to claim 7, where the two IR emitting means are electrically connected in parallel.

9. A microphone unit according to claim 6, where four IR emitting means are provided and where all the IR emitting means are electrically connected in parallel.

10. A microphone unit according to claim 7 or 9, where the IR emitting means is/are positioned adjacent the microphones.

11. A microphone unit according to claim 6, A system according to claim 1, where an antenna is provided as a signal emitter for transmission of RF signals, preferably FM signals.

12. A microphone unit according to claim 6, where the microphone unit comprises a curved element having two opposite ends where the two microphones are positioned substantially at the respective ends of the curved element.

13. A microphone unit according to claim 6, where the microphone unit comprises a curved element having two opposite ends, where the ends of this curved element are adapted to rest behind the wearers neck and where the microphones are positioned at locations at distance from the respective ends of the curved element.

14. A microphone unit according to claim 13, where the microphones are positioned on arms protruding from the curved element.
